Europäisches Patentamt

European Patent Office

Office européen des brevets

(11) Publication number: **0 314 971**
**A2**

# (12) EUROPEAN PATENT APPLICATION

(21) Application number: **88117247.2**

(22) Date of filing: **17.10.88**

(51) Int. Cl.⁴: **B09B 3/00**

(30) Priority: **05.11.87 IT 1257587**

(43) Date of publication of application:
**10.05.89 Bulletin 89/19**

(84) Designated Contracting States:
**AT BE CH DE ES FR GB GR LI LU NL SE**

(71) Applicant: **Tassara, Maurizio**
**Via Calamandrei 8/13**
**I-16158 Genova(IT)**

(72) Inventor: **Tassara, Maurizio**
**Via Calamandrei 8/13**
**I-16158 Genova(IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

(54) **Method for disposal of toxio and harmful industrial waste through its incorporation in ceramic products.**

(57) This invention covers a method for disposal of toxic and harmful industrial waste through its incorporation in ceramic paste, prepared and fired at a temperature ranging between 900 and 1400° C, according to the type of ceramic pastes. Toxic and harmful industrial waste, usually consisting of metal and its compounds, will be bonded to basic ceramic products during sintering, so as to obtain an inert ceramic product which can be normally used, or else a special product that can be dumped.

EP 0 314 971 A2

# METHOD FOR DISPOSAL OF TOXIO AND HARMFUL INDUSTRIAL WASTE THROUGH ITS INCORPORATION IN CERAMIC PRODUCTS.

This invention covers a method for disposal of toxic and harmful industrial waste through its incorporation in ceramic paste, prepared and fired at a temperature ranging between 900 and 1400° C, according to the type of ceramic pastes. Toxic and harmful industrial waste, usually consisting of metal and its compounds, will be bonded to basic ceramic products during sintering, so as to obtain an inert ceramic product which can be normally used, or elase a special product that can be dumped.

It is well known that industrial waste may be of various nature and that these wastes are normally classified as inert, special, toxic and harmful or noxious.

It is also known that although there are special controlled sites available in almost all industrialized countries for the disposal of inert and special waste, it is still extremely difficult from environmental, technical and economic viewpoint, efficiently to dispose of toxic and noxious wastes with are now burnt off-shore according to the European Patent n° 85102388.7 or dumped on special barren waste storage sites.

This invention provides for incorporation of toxic and noxious industrial waste in special ceramic pastes, properly prepared and batched . Its constituents will depend on the waste to be processed, thus drastically reducing their solubility. More specifically, the above toxic-harmfull substances are bonded to ceramic raw materials at ambient temperature, to be subsequently fired at a temperature ranging from 900° to 1400° C during the sintering stage. Sintering is achieved with or without fritting, according to whether melting of one or more components occurs, thus obtaining a product with controlled porosity .

Incorporation of the waste in ceramic creates such a close bond as to eliminate the risk - or at least to keep within the limits fixed by the Law - of toxic or noxious waste being released into the atmosphere; these ceramic products can be considered inert and can hence be either normally utilized or treated as special waste and discharged without risk,

It is well known that the so called "ceramic pastes" closely depend on the properties of the final product, on the available raw materials and on the firing facilities; their composition is largely based on their clayey constituents.

"Clayey materials" are including all alumina hydrosilicates, the chemical composition of which is corresponding to the general formula:
$nAl_2O_3.hSiO_2.xH_2O$

A great number of materials existing in nature can be included in this formula and, in order to simplify the composition of the most important ceramic products, variations may be kept in principle within the following limits:
- Majolica: clayey substances 40% - Quartz 35% - felspar 25%.
- Earthenware: clayey substances 40 - 50% ; quartz 40 -45%; Felspar 10 - 15%.
- Porcelain: clayey substances 45 - 60%; Quartz 23 - 30%; Felspar 20 - 25%.

Clays, which are predominant in these pastes, although belonging to the same structural type, may have quite different chemical composition upon substition of some ions on the crystal lattice, but they all keep the same chemico-physical characteristics.

More in detail, the chemical formula of clayey (or kaolinite) substances is: $Al_2O_3.2SiO_2.2H_2O$, with a 39.53% content of $Al_2O_3$; 46.52% of $SiO_2$ and 13.95% of $H_2O$.

As already explained before, they belong to the large group of silicates, of which some basic information is reported hereinafter.

In principle, the formation of silicates is due to the fact that the Silicon atom coordinates four oxygen atoms, thus releasing four negative charges.

Spatial lay-out of this assembly is a tetrahedron; it is assumed that the silicium atom is located in the center of this tetrahedron while the oxygen atoms are located at the vertices.

The negative charges can be saturated by external positive metal elements, while maintaining the macroanion $SiO_4$ as a base; or else, they can link up other similar macroanions, thus forming a complex group of silicates. These are the fundamental structures of silicates with are sidewise bonded in layers with other elements or well defined groups of elements, causing the formation of the numerous silicate categories.

The invention in question is based on this behaviour of silicates, involving a careful blending at room temperature of the ceramic silicon-aluminous constituents at different percentages, according to the chemical composition of the toxic-noxious waste to be processed; these wastes, reduced to the proper grain size, are then mixed in adequate quantities with the clayey substances, by adding a preset amount of liquid and of a chemical binder, if necessary, so as to form a paste with a strong cohesion both in pasty state and after drying, having the characteristic plasticity of ceramic materials.

This paste, the cermica formation technology and the processing phases of which are described hereinafter, will permit to decontaminate toxic and noxious industrial wastes, by means of a chemical sintering bond at the end of the transformation, due to firing of the above described pastes.

In particular, transformation achieved by firing, can be summarized as follows:

A) the chemico-physical nature: variations of the chemical and crystalline structure;

B) the mechanical nature: swelling, porosity, mechanical strength etc..

These transformations occur in a regular sequence during firing and they may be grouped in the following phases:
- from 0° to 400°C: elimination of residual moisture after drying and especially of the water from the jelly film covering the particles. Organic substances are burnt and volatilized. During this stage, heat will cause the material to swell up to about 100°C, followed by shrinking due to the elimination of any residue moisture. Maximum shrinkage occurs at about 250°C.

Swelling then continues, but no further chemical and structural variations occur during this stage.
- Combination water is eliminated between 400° and 600°C by heat absorption; this will cause an endothermal reaction with decomposition of clay into free oxides. The swelling terminates and is followed by shrinkage.
- Between 600° and 900°C, dehydration produces a very unstable and reactive "metakaolin" compound. Alumina is soluble in HCl and silicium in alkali. This "metakaolin" tends to decompose in gamma alumina, it has a great moisture absoprtion and swelling capacity.
- Two exothermal reactions occur between 900°C and 1000°C with heat development. The first reaction is due to the transformation of gamma alumina in alpha alumina, whereas the second is generated by the combination of alumina with silicon dioxide, thus forming silicates.
- Between 1000° and 1750° thru 1950°C other reactions occur due to combination, until complete melting of the materials.

The technique, scope of the invention in question ensures decontamination of the toxic and noxious waste through firing at a temperature ranging between 900° and 1400°C, without further extending the transformation cycle, since sintering already takes place at these temperature values, with the formation of silicates and ensueing chemical bond between the various components of the processed materials. The sintered material is then cooled down in a properly defined cooling cycle.

A firing temperature of about 1000°C is sufficient for some ceramic pastes, to complete and guarantee their sintering, whereas other ceramic pastes may require from 200° to 1400°C.

After cooling, the material thus obtained will be stable and bonding will have reduced its solubility or release to acceptable limits for toxicologic classification of the final product in the inert or, at the most, in the special product category.

The decontamination method according to this invention, is based upon the well known normal process for the manufacture of ceramic products, obtained from a basic ceramic paste in which toxic and harmful waste will now be incorporated.

In short, the above can be achieved by careful preparation of the ceramic paste to which toxic and noxious waste is added.

Obviously, before reaching an industrial production stage, it will be necessary to identify the best composition of the added ceramic paste, so as to determine the percentage of permissible toxic and noxious waste. This will require laboratory tests on limited samples that will then be fired to sinter temperature which, as explained before, will be ranging between 900° and 1400°C, according to the ceramic paste type.

A final analysis will permit adjustment of the firing curve and, if necessary, of the composition of the paste until an optimum ceramic paste is obtain which will ensure decontamination of the processed waste to be classified, according to its characteristic composition and firing, in fired-clay, (terracotta), soft-paste and hard-paste porcelain, grès, earthenware etc.

It will also be necessary to determine the utilization of the final product, which shall have suitable characteristics for commercial exploitation. Otherwise, it shall be disposed of as decontaminated waste, having lost its toxicity and noxious nature after such processing.

Then follows a study on the sample and when the desired results are obtained, production can be started on commercial scale. The conditions of the toxic and noxious product, when collected at the producer plant, shall be duly taken into account.

Various solutions will be possible: for instance, if the noxious and toxic product is consisting of homogenous sludges, processing of such sludges will require their solution in special vertical or screw-fitted dissolution tanks after adding a proper amount of water. The eluate will then be filtered.

If the waste is in dry or granular condition, it shall be crushed by various types of ceramic mills according to the grain size distribution of the product (jaw-breakers, crushing rolls, hammer crusher, pug mills etc.).

Finally, if the waste in question is sludge containing aggregate or non water-soluble particles of some consistency, the product shall be treated in a ceramic ball mill.

Processing of these toxic and noxious substances is similar to the treatment of the ceramic consituents and shall be completed separately, when these toxic and harmful substances are still in different conditions from those of the ceramic components. Such preliminary treatment may be performed by using an impalpable ceramic mix and toxic harmful substances to be crushed, or else with noxious and toxic liquid waste without any suspended particles and fire-clay containing elements to be crushed. Conversely, when toxic and noxious waste and the ceramic components are in the same state and chemico-physical phase, such as for instance liquid dissolved with dissolved liquid, impalpable powder with impalpable powder, ecc. non preliminary treatment will be necessary, but the batch can be processed like any normal ceramic paste.

The method for disposal of toxic and harmful industrial waste, subject matter of this invention, is valid - for instance - for waste containing contaminated metals and their compounds such as Selenium, copper, chrome, vanadium, manganese, antimonium, cadmium, lead etc. and their compounds.

For indicatory purposes, the method for disposal has been used for industrial sludge residues from the ceramic industry. These sludges are toxic and noxious, since they are containing in average:
- Pb 20500 thru 68600 mg/kg
- Cd 20 thru 180 mg(kg
- Cr about 180 mg/kg.

These sludges have been incorporated in clayey amalgam at the rate of 50%.

After the necessary treatment, the mix thus obtained was shaped into crockery and fired in an over at 1000° C.

Pb and Cd release tests where effected with 4% acetic acid according to CEE test methods and the following results were obtained:
- Pb 2,10 mg/lt or 0,0966 mg/dm$^2$,
- Cd 0,008 mg/lt or 0,000368 mg/dm$^2$,
- Cr less than 0,1 mg/lt or 0,0046 mg/dm$^2$.

Therefore, release remains within the limits established for inert substances and the crockery can be used for food.

Similar tests on toxic and noxious products of other origin (e.g. toxic ashes and particles collected from the electrodstatic filter of a town garbage incinerator, have shown similar findings or at least results which permit to classify the final ceramics as "special" but never toxic or harmful.

Other tests performed on waste, processed for the production of hexavalent chrome, on iron metallurgy residues containing lead and iron oxide etc. further corroborated the validity of the informative concept of this Patent. Obviously, besides toxic industrial waste, this method for disposal can also be used for other noxious and toxic waste such as the discharge from research and analysis laboratories.

This invention specifically covers the disposal of toxic and harmful waste but this decontamination method can also be used for special waste which may not be toxic or noxious but has to be disposed of by transformation in inert and useful products.

As exhaustively described, final ceramics obtained by the method subject matter of this invention through the incorporation of toxic and noxious products, may be considered as inert or special. It has also been stated that inert ceramic products can be safely used theorically for domestic purposes and for food, and practically for industrial purposes whereas special products have to be sent to the dump. According to this invention, it is however possible to used such inert non polluting ceramics for industrial purposes.

These inert ceramics can indeed be profitably utilized, after molding or granulation, for brick-making, or road paving, (instead of sand and gravel), for backfilling, embankments, aggregate for concrete (instead of sand and gravel etc.). Therefore, even inert ceramics that have already achieved the favorable result of eliminating toxic and harmful substances, can profitably be used in the industry to replace other, normally used materials, thus enhancing the usefulness of this method for waste disposal.

## Claims

1) Method for the disposal of toxic and noxious industrial waste of any nature and origin, **characterized** by the fact that these toxic and noxious wastes are added to clayey components for ceramics, so as to obtain a ceramic paste which is then fired at a temperature ranging between 900° C and 1400° C to create a final ceramic product in which the toxic and noxious products are totally incorporated and bonded by sintering and crystalline diffusion, which can be considered as either inert or special.

2) Method as set form in claim 1, **characterized** by the fact that the ceramics in which toxic and noxious waste has been incorporated and have thus become inert, can be used for the manufacture of industrial products even suitable for foodstuffs, whereas ceramics classified as special, can be normally sent to the dump.

3) Method as set forth in claim 1, **characterized** by the fact that toxic and noxious waste having the same aspect and consistency of the ceramic clay mix can be directly batched by normal mechanical processing of the ceramic paste, whereas waste having an appearance and consistency differentiating from it from clayey materials, shall be prepared and treated before it ia batched with the ceramic paste.

4) Method as set forth in claim 1, **characterized** by the fact that any and all types of toxic and noxious waste have to be tested at the laboratory so as to determine the suitable quality of the basic ceramic product and the percentages to be added so as to obtain a final enert or special ceramic product.

5) Method as set form in claim 1, **characterized** by the fact that this method can also be used for special waste which is usually dumped, but can now be transformed into inert ceramic products.